(19) **Europäisches Patentamt / European Patent Office / Office européen des brevets**

(11) **EP 2 091 880 B1**

(12) **EUROPEAN PATENT SPECIFICATION**

(45) Date of publication and mention of the grant of the patent:
**23.02.2011 Bulletin 2011/08**

(21) Application number: **07862850.0**

(22) Date of filing: **13.12.2007**

(51) Int Cl.:
*C03C 25/10* (2006.01)    *C03C 25/26* (2006.01)
*C09D 11/00* (2006.01)    *C09D 175/14* (2006.01)
*C09D 175/16* (2006.01)

(86) International application number:
**PCT/US2007/025482**

(87) International publication number:
**WO 2008/076300 (26.06.2008 Gazette 2008/26)**

(54) **D1379 P RADIATION CURABLE PRIMARY COATING ON OPTICAL FIBER**

STRAHLUNGSHÄRTBARE D1379-GRUNDIERBESCHICHTUNG FÜR OPTISCHE FASERN

REVÊTEMENT PRIMAIRE DURCISSABLE PAR RAYONNEMENT D1379 P SUR FIBRE OPTIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.12.2006 US 874722 P**
**24.09.2007 US 974631 P**

(43) Date of publication of application:
**26.08.2009 Bulletin 2009/35**

(73) Proprietor: **DSM IP Assets B.V.**
**6411 TE Heerlen (NL)**

(72) Inventors:
• **WU, Xiaosong**
**Charlotte, NC 28277 (US)**
• **SCHMID, Steven R.**
**East Dundee, IL 60118 (US)**
• **MURPHY, Edward J.**
**Arlington Heights, IL 60005 (US)**
• **ZIMMERMAN, John M.**
**Crystal Lake, IL 60014 (US)**
• **TORTORELLO, Anthony Joseph**
**Elmhurst, IL 60126 (US)**

(74) Representative: **Hatzmann, Martin**
**Vereenigde**
**Johan de Wittlaan 7**
**2517 JR Den Haag (NL)**

(56) References cited:
EP-A- 1 408 017    EP-A- 1 647 585
WO-A-02/42236    WO-A-98/57902
CN-A- 16 515 331    US-A- 5 616 630
US-A1- 2004 209 994    US-B2- 6 714 712
US-B2- 7 135 229

• PODKOSCIELNY W ET AL: "URETHANE-ACRYLATE COMPOSITIONS CURED BY UV RADIATION AS INTERMEDIATE PROTECTIVE COVERS OF OPTICAL FIBERS" ANGEWANDTE MAKROMOLEKULARE CHEMIE. APPLIED MACROMOLECULAR CHEMISTRY AND PHYSICS, WILEY VCH, WEINHEIM, DE, vol. 242, November 1996 (1996-11), pages 123-138, XP000689751 ISSN: 0003-3146
• "Coscat 83" Product Identification CasChem, Inc. 14-09-1984, revised 23-02-1995
• P.A.M. Steeman: "Mechanical analysis of the in-situ Primary Coating modulus test for optical cables." In: "Proceedings 52nd International Wire and cable Symposium" 2003, IWCS , Philadelphia,USA

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 091 880 B1

**Description**

CROSS-REFERENCE TO RELATED APPLICATIONS

This patent application claims priority to U.S. Provisional Patent Application No. 60/874,722, "P Radiation Curable Primary Coating on Optical Fiber", filed December 14, 2006, and to U.S. Provisional Patent Application No. 60/974,631, "P Radiation Curable Primary Coating on Optical Fiber", filed September. 24, 2007.

FIELD OF THE INVENTION

The present invention relates to radiation curable coatings for use as a Primary Coating for optical fibers, optical fibers coated with said coatings and methods for the preparation of coated optical fibers.

BACKGROUND OF THE INVENTION

Optical fibers are typically coated with two or more radiation curable coatings. These coatings are typically applied to the optical fiber in liquid form, and then exposed to radiation to effect curing. The type of radiation that may be used to cure the coatings should be that which is capable of initiating the polymerization of one or more radiation curable components of such coatings. Radiation suitable for curing such coatings is well known, and includes ultraviolet light (hereinafter "UV") and electron beam ("EB"). The preferred type of radiation for curing coatings used in the preparation of coated optical fiber is UV.

The coating which directly contracts the optical fiber is called the Primary Coating, and the coating that covers the Primary Coating is called the Secondary Coating. It is known in the art of radiation curable coatings for optical fibers that Primary Coatings are advantageously softer than Secondary Coatings. One advantage flowing from this arrangement is enhanced resistance to Microbends.

Previously described Radiation Curable Coatings suitable for use as a Primary Coating for Optical Fiber include the following:

Published Chinese Patent Application No. CN16515331, "Radiation Solidification Paint and Its Application", assigned to Shanghai Feikai Photoelectric, inventors: Jibing Lin and Jinshan Zhang, describes and claims a radiation curable coating, comprising oligomer, active diluent, photoinitiator, thermal stabilizer, selective adhesion promoter, in which the content of the oligomer is between 20% and 70% (by weight, the following is the same), the content of the other components is between 30% and 80%; the oligomer is selected from (meth) acrylated polyurethane oligomer or a mixture of (meth) acrylated polyurethane oligomer and (meth) acrylated epoxy oligomer; wherein said (meth) acrylated polyurethane oligomer is prepared by using at least the following substances:

(1) one of polyols selected from polyurethane polyol, polyamide polyol, polyether polyol, polyester polyol, polycarbonate polyol, hydrocarbon polyol, polysiloxane polyol, a mixture of two or more same or different kinds of polyol (s);

(2) a mixture of two or more diisocyanates or Polyisocyanates;

(3) (meth) acrylated compound containing one hydroxyl capable of reacting with isocyanate.

Example 3 of Published Chinese Patent Application No. CN16515331 is the only Example in this published patent application that describes the synthesis of a radiation curable coating suitable for use as a Radiation Curable Primary Coating. The coating synthesized in Example 3 has an elastic modulus of 1.6 MPa.

The article, "UV-CURED POLYURETHANE-ACRYLIC COMPOSITIONS AS HARD EXTERNAL LAYERS OF TWO-LAYER PROTECTIVE COATINGS FOR OPTICAL FIBRES", authored by W. Podkoscielny and B. Tarasiuk, Polim.Tworz.Wielk, Vol. 41, Nos. 7/8, p.448-55, 1996, NDN- 131-0123-9398-2, describes studies of the optimization of synthesis of UV-cured urethane-acrylic oligomers and their use as hard protective coatings for optical fibers. Polish-made oligoetherols, diethylene glycol, toluene diisocyanate (Izocyn T-80) and isophorone diisocyanate in addition to hydroxyethyl and hydroxypropyl methacrylates were used for the synthesis. Active diluents (butyl acrylate, 2-ethylhexyl acrylate and 1,4-butanediol acrylate or mixtures of these) and 2,2-dimethoxy-2-phenylacetophenone as a photoinitiator were added to these urethane-acrylic oligomers which had polymerization-active double bonds. The compositions were UV-irradiated in an oxygen-free atmosphere. IR spectra of the compositions were recorded, and some physical and chemical and mechanical properties (density, molecular weight, viscosity as a function of temperature, refractive index, gel content, glass transition temperature, Shore hardness, Young's modulus, tensile strength, elongation at break, heat resistance and water vapor diffusion coefficient) were determined before and after curing.

The article, "PROPERTIES OF ULTRAVIOLET CURABLE POLYURETHANE-ACRYLATES", authored by M. Koshiba; K.K.S. Hwang; S.K. Foley.; D.J. Yarusso; and S. L. Cooper; published in J.Mat.Sci., 17,No.5,May 1982,p. 1447-58; NDN- 131-0063-1179-2; described a study that was made of the relationship between the chemical structure and physical properties of UV cured polyurethane-acrylates based on isophorone diisocyanate and TDI. The two systems were prepared with varying soft segment molecular weight and cross linking agent content. Dynamic mechanical test results showed that one- or two-phase materials might be obtained, depending on soft segment molecular weight. As the latter increased, the polyol Tg shifted to lower temperatures. Increasing using either N-vinyl pyrrolidone (NVP) or polyethylene glycol diacrylate (PEGDA) caused an increase in Young's modulus and ultimate tensile strength. NVP cross linking increased toughness in the two-phase materials and shifted the high temperature Tg peak to higher temperatures, but PEGDA did not have these effects. Tensile properties of the two systems were generally similar.

Typically in the manufacture of radiation curable coatings for use on Optical Fiber, isocyanates are used to make urethane oligomers. In many references, including U.S. Patent No. 7,135,229, "RADIATION-CURABLE COATING COMPOSITION", Issued November 14, 2006, assigned to DSM IP Assets B.V., column 7, lines 10-32 the following teaching is provided to guide the person of ordinary skill in the art how to synthesize urethane oligomers: Polyisocyanates suitable for use in making compositions of the present invention can be aliphatic, cycloaliphatic or aromatic and include diisocyanates, such as 2,4-toluene diisocyanate, 2,6-toluene diisocyanate, 1,3-xlylene diisocyanate, 1,4-xylylene diisocyanate, 1, 5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexyl)isocyanate, 2,2,4-trimethylhexamethylene diisocyanate, bis(2-isocyanate-ethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate and 2,5(or 6)-bis(isocyanatomethyl)-bicyclo[2.2.1]heptane. Among these diisocyanates, 2,4-toluene diisocyanate, isophorone diisocyanate, xylylene diisocyanate, and methylenebis(4-cyclohexylisocyanate) are particularly preferred. These diisocyanate compounds are used either individually or in combination of two or more.

EP-A-1 408 017 is directed to a ribbon assembly comprising a plurality of coated optical glass fibers. Aim of this document is to provide a radiation curable ink composition which exhibits enhanced adhesion to the outer primary coating. Accordingly, this document does not concern a radiation curable primary coating composition.

US-B-6 714 712 is directed to radiation curable compositions for coating optical fibers. The preparation of the polyester and/or alkyd (meth)acrylate oligomers mentioned in this document does not involve the use of isocyanates, let alone the combination of an aliphatic and an aromatic isocyanate.

WO-A-02/42236 relates to a specific method of drying optical fiber coatings in order to increase the adhesion between the coating and the fiber. US-B-7 135 229 describes alkyd based radiation curable solvent free coating compositions that may be used as primary and secondary coating compositions. EP-A-1 647 585 describes radiation curable compositions which can be used as top coatings on e.g. glass substrates. WO-A-98/57902 is directed to radiation curable coating compositions which can be used as primary or secondary coatings for optical fibers. US-A-2004/0 209 994 describes curable compositions comprising polyester oligomers, which may be used as coating compositions for optical fibers. US-A-5 616 630 is directed to an ester/urethane acrylate hybrid oligomer, which can be used in coating compositions. Podkoscielny et al., Applied Macromolecular Chemistry and Physics 1996, 242, 123-138 is directed to optimizing urethane-acrylate radiation curable compositions. None of these documents disclose using a combination of an aromatic and an aliphatic isocyanate for preparing one and the same oligomer.

While a number of Primary Coatings are currently available, it is desirable to provide novel Primary Coatings which have improved manufacturing and/or performance properties relative to existing coatings.

SUMMARY OF THE INVENTION

A first aspect of the instant claimed invention is a radiation curable Primary Coating composition comprising:

　　A) an oligomer;
　　B) a first diluent monomer;
　　C) a second diluent monomer,
　　D) a photoinitiator;
　　E) an antioxidant; and
　　F) an adhesion promoter;

wherein said oligomer is the reaction product of:

i) a hydroxyethyl acrylate;
ii) an aromatic isocyanate;
iii) an aliphatic isocyanate;
iv) a polyol;
v) a catalyst; and an
vi) inhibitor; and

wherein said catalyst is selected from the group consisting of dibutyl tin dilaurate; metal carboxylates, sulfonic acids, amino or organo-base catalysts, alkoxides of zirconium and titanium, and ionic liquid phosphonium, imidazolium, and pyridinium salts, and
wherein said oligomer has a number average molecular weight of from at least 4000 g/mol to less than or equal to 15,000 g/mol; and
wherein a cured film of said radiation curable primary coating composition has a peak tan delta Tg of from -25°C to -45°C and a modulus of from 0.50 MPa to 1.2 MPa.

A second aspect of the instant claimed invention is a process for coating an, optical fiber, the process comprising:

a) operating a glass drawing tower to produce a glass optical fiber; and
b) coating said glass optical fiber with the radiation curable Primary Coating composition of the instant claimed invention.

A third aspect of the instant claimed invention is a process for coating an optical fiber, the process comprising:

a) operating a glass drawing tower at a line speed of between 750 meters/minute and 2100 meters/minute to produce a glass optical fiber; and
b) coating said glass optical fiber with the radiation curable Primary Coating composition of the instant claimed invention.

A fourth aspect of the instant claimed invention is a wire coated with a first and second layer, wherein the first layer is a cured radiation curable Primary Coating of the instant claimed invention that is in contact with the outer surface of the wire and the second layer is a cured radiation curable Secondary Coating in contact with the outer surface of the Primary Coating,
wherein the cured Primary Coating on the wire has the following properties after initial cure and after one month aging at 85°C and 85% relative humidity:

A) a % RAU of from 84% to 99%;
B) an in-situ modulus of between 0.15 MPa and 0.60 MPa; and
C) a Tube Tg, of from -25°C to -55°C.

A fifth aspect of the instant claimed invention is an optical fiber coated with a first and second layer, wherein the first layer is a cured radiation curable Primary Coating of the instant claimed invention that is in contact with the outer surface of the optical fiber and the second layer is a cured radiation curable Secondary Coating in contact with the outer surface of the Primary Coating,
wherein, the cured Primary Coating on the optical fiber has the following properties after initial cure and after one month aging at 85°C and 85% relative humidity:

A) a % RAU of from 84% to 99%;
B) an in-situ modulus of between 0.15 MPa and 0.60 MPa; and
C) a Tube Tg, of from -25°C to -55°C.

DETAILED DESCRIPTION OF THE PREFERRED EMBODIMENTS

Throughout this patent application, the following abbreviations have the indicated meanings:

| A-189 | γ-mercaptopropyltrimethoxysilane, available from General Electric |
| BHT | 2,6-di-tert-butyl-p-cresol, available from Fitz Chem |

(continued)

| CAS | means Chemical Abstracts Registry Number |
|---|---|
| DBTDL | dibutyl tin dilaurate available from OMG Americas |
| SR 504 D | ethoxylated nonyl phenol, available from Sartomer |
| HEA | hydroxyethyl acrylate, available from BASF |
| Irganox 1035 | thiodiethylene bis (3,5-di-tert-butyl-4-hydroxyhydrocinnamate), available from Ciba |
| P2010 | polypropylene glycol (2000 MW), available from BASF |
| IPDI | isophorone diisocyanate available from Bayer |
| TDI | a mixture of 80% 2,4-toluene diisocyanate and 20% 2,6-toluene diisocyanate, available from Bayer |
| Photomer 4066 | ethoxylated nonolphenol acrylate, available from Cognis |
| Irgacure 819 | phenylbis(2,4,6-trimethyl benxoyl) phosphine oxide, available from Ciba |
| SR 306 | tripropylene glycol diacrylate, available from Sartomer |

In one aspect, the present invention provides a radiation curable Primary Coating composition comprising:

A) an oligomer;
B) a first diluent monomer;
C) a second diluent monomer,
D) a photoinitiator;
E) an antioxidant; and
F) an adhesion promoter;

wherein said oligomer is the reaction product of:

i) a hydroxyethyl acrylate;
ii) an aromatic isocyanate;
iii) an aliphatic isocyanate;
iv) a polyol;
v) a catalyst; and an
vi) inhibitor, and

wherein said catalyst is selected from the group consisting of dibutyl tin dilaurate; metal carboxylates, including, but not limited to: organobismuth catalysts such as bismuth neodecanoate, CAS 34364-26-6; zinc neodecanoate, CAS 27253-29-8; zirconium neodecanoate, CAS 39049-04-2; and zinc 2-ethylhexanoate, CAS 136-53-8; sulfonic acids, including but not limited to dodecylbenzene sulfonic acid, CAS 27176-87-0; and methane sulfonic acid, CAS 75-75-2; amino or organo-base catalysts, including, but not limited to: 1,2-dimethylimidazole, CAS 1739-84-0; and diazabicyclo [2.2.2]octane (DABCO), CAS 280-57-9 (strong base); and triphenyl phosphine; alkoxides of zirconium and titanium, including, but not limited to zirconium butoxide, (tetrabutyl zirconate) CAS 1071-76-7; and titanium butoxide, (tetrabutyl titanate) CAS 5593-70-4; and ionic liquid phosphonium, imidazolium, and pyridinium salts, such as, but not limited to, trihexyl(tetradecyl)phosphonium hexafluorophosphate, CAS No. 374683-44-0; 1-butyl-3-methylimidazolium acetate, CAS No. 284049-75-8; and N-butyl-4-methylpyridinium chloride, CAS No. 125652-55-3; and tetradecyl(trihexyl) phosphonium chloride, commercially available as Cyphosil 101; and

wherein said oligomer has a number average molecular weight of from at least 4000 g/mol to less than or equal to 15,000 g/mol;

wherein a cured film of said radiation curable primary coating composition has a peak tan delta Tg of from -25°C to -45°C and a modulus of from 0.50 MPa to 1.2 MPa.

The oligomer of the present invention is a urethane acrylate oligomer, comprising an acrylate group, urethane groups and a backbone. The backbone is derived from use of a polyol which has been reacted with a diisocyanate and hydroxyethylacrylate.

The oligomer is prepared by reacting HEA with an aromatic isocyanate (e.g., TDI) and an aliphatic isocyanate (e.g., IPDI); a polyol (e.g., P2010); a catalyst (e.g., DBTDL); and an inhibitor (e.g., BHT).

The aromatic and aliphatic isocyanates are well known, and commercially available. A preferred aromatic isocyanate is a mixture of 80% 2,4-toluene diisocyanate and 20% 2,6-toluene diisocyanate, TDI, while a preferred aliphatic isocyanate is isophorone diisocyanate, IPDI.

When preparing the oligomer, the isocyanate component may be added to the oligomer reaction mixture in an amount ranging from 1 to 25 wt.%, desirably from 1.5 to 20 wt.%, and preferably from 2 to 15 wt.%, all based on the weight percent of the oligomer mixture.

Desirably, the isocyanates should include more aliphatic isocyanate than aromatic isocyanate. More desirably, the ratio of aliphatic to aromatic isocyanate may range from 2-7:1, preferably from 3-6:1, and most preferably from 3-5:1.

A variety of polyols may be used in the preparation of the oligomer. Examples of suitable polyols are polyether polyols, polyester polyols, polycarbonate polyols; polycaprolactone polyols, acrylic polyols, and the like. These polyols may be used either individually or in combinations of two or more. There are no specific limitations to the manner of polymerization of the structural units in these polyols; any of random polymerization, block polymerization, or graft polymerization is acceptable. Preferably, P2010 (BASF) is used.

. When preparing the oligomer, the polyol component may be added to the oligomer reaction mixture in any suitable amount, desirably ranging from 20 to 80 wt.%, more desirably from 30 to 70 wt.%, and preferably from 40 to 60 wt.%, all based on the weight percent of the oligomer mixture.

The number average molecular weight of the polyols suitable for use in the preparation of the oligomer may range from 500 to 8000, desirably from 750 to 6000, and preferably from 1000 to 4000.

The acrylate component used in the preparation of the oligomer is hydroxyethylacrylate HEA). When preparing the oligomer, the acrylate component may be added to the oligomer reaction mixture in any suitable amount, desirably from 0.5 to 5 wt.%, more desirably from 0.7 to 3 wt.%, and preferably from 1 to 2 wt %, all based on the weight of the oligomer reactant mixture.

In the reaction which provides the oligomer, a urethanization catalyst may be used which is one or more selected from the group consisting of dibutyl tin dilaurate (abbreviated as DBTDL); metal carboxylates, including, but not limited to: organobismuth catalysts such as Coscat 83 (an organobismuth catalyst, available from CosChem) bismuth neodecanoate, CAS 34364-26-6; zinc neodecanoate, CAS 27253-29-8; zirconium neodecanoate, CAS 39049-04-2, zinc 2-ethylhexanoate, CAS 136-53-8; sulfonic acids, including but not limited to dodecylbenzene sulfonic acid, CAS 27176-87-0; methane sulfonic acid, CAS 75-75-2; amino or organo-base catalysts, including, but not limited to: 1,2-dimethylimidazole, CAS 1739-84-0 (very weak base) and diazabicyclooctane (AKA DABCO), CAS 280-57-9 (strong base); triphenyl phosphine TPP); alkoxides of zirconium and titanium, including, but not limited to Zirconium butoxide (tetrabutyl zirconate) CAS 1071-76-7 and Titanium butoxide (tetrabutyl titanate) CAS 5593-70-4; and ionic liquid phosphonium, imidazolium, and pyridinium salts, such as, but not limited to, Cyphos il 101 (tetradecyl(trihexyl) phosphonium chloride). The preferred catalysts are DBTDL and Coscat 83. The most preferred catalyst is DBTDL.

The catalysts may be used in the free, soluble, and homogeneous state, or they may be tethered to inert agents such as silica gel, or divinyl crosslinked macroreticular resins, and used in the heterogeneous state to be filtered at the conclusion of oligomer synthesis.

When preparing the oligomer, the catalyst component may be added to the oligomer reaction mixture in any suitable amount, desirably from 0.01 to 0.1 wt.%, and more desirably from 0.01 to 0.05 wt.%, all based on the weight of the oligomer reactant mixture.

An inhibitor is also used in the preparation of the oligomer. This component assists in the prevention of acrylate polymerization during oligomer synthesis and storage. A number of commercially available inhibitors are known in the art and may be used in the preparation of the oligomer. In an embodiment of the instant claimed invention the inhibitor is BHT.

. When preparing the oligomer, the inhibitor component may be added to the oligomer reaction mixture in any suitable amount, desirably from 0.02 to 0.2 wt.%, and more desirably from 0.05 to 0.10 wt.%, all based on the weight of the oligomer reactant mixture.

The preparation of the oligomer may be under taken by any suitable process, but preferably proceeds by mixing the isocyanates, polyol and inhibitor components, then adding the catalyst thereto. The mixture may then be heated, and allowed to react until completion. The HEA may then be added, and the mixture heated until the reaction is completed. Generally, the oligomer reaction is carried out at a temperature from 10°C to 90°C, and preferably from 30 °C to 85°C.

The oligomer has a number average molecular weight of from at least 4000g/mol to less than or equal to 15,000 g/mol. An embodiment of the instant claimed invention has an oligomer which has a number average molecular weight of at least 5000glmol. An embodiment of the instant claimed invention has an oligomer which has a number average molecular weight of at least 6000g/mol.

An embodiment of the instant claimed invention has an oligomer which a number average molecular weight of less than or equal to 10,000g/mol. An embodiment of the instant claimed invention has an oligomer which has a number average molecular weight of less than or equal to 9000g/mol.

The number average molecular weight of the Primary Coating oligomer desirably ranges from 5000 to 10,000, more desirably from 6000 to 9000, and preferably from 7000 to 8000.

After the preparation of the oligomer, the radiation curable composition may be prepared. The amount of the oligomer in the curable composition may vary depending on the desired properties, but will desirably range from 20 to 80 wt.%, more desirably from 30 to 70 wt.%, and preferably from 40 to 60 wt.%, based on the weight percent of the radiation curable composition.

A plurality of reactive monomer diluents is also added to the curable composition; such diluents are well known in the art. A variety of diluents are known in the art and may be used in the preparation of the oligomer including, without limitation, alkoxylated alkyl substituted phenol acrylate, such as ethoxylated nonyl phenol acrylate (ENPA), propoxylated nonyl phenol acrylate (PNPA), vinyl monomers such as vinyl caprolactam (nVC), isodecyl acrylate (IDA), (2-)ethyl-hexyl acrylate (EHA), di-ethyleneglycol-ethyl-hexylacrylate (DEGEHA), iso-bornyl acrylate (IBOA), tri-propyleneglycol-diacrylate (TPGDA), hexane-diol-diacrylate (HDDA); trimethylolpropane-triacrylate (TMPTA), alkoxylated trimethylolpropane-triacrylate, and alkoxylated bisphenol A diacrylate such as ethoxylated bisphenol A diacrylate (EO-BPADA), Photomer 4066, SR 504D and SR 306. Preferably, a mixture of SR 504D and/or Photomer 4066 (first diluent) and SR 306 (second diluent) are used as the diluent component.

The total amount of diluent in the curable composition may vary depending on the desired properties, but will desirably range from 20 to 80 wt.%, more desirably from 30 to 70 wt.%, and preferably from 40 to 60 wt.%, based on the weight percent of the radiation curable composition. The diluent component desirably includes an excess of the first diluent relative to the second diluent of 20-80:1, and desirably from 40-60:1.

The curable composition also includes one or more photoinitiators. Such components are well known in the art. The photoinitiators can be included in amounts ranging from 0.2 wt.% to 5 wt.% of the curable composition, and preferably from 0.5 wt.% to 3 wt.%. A preferred photoinitiator is Ingacure 819.

A further component used in the curable composition is an antioxidant. Such components also are well known in the art. The antioxidant component may be included in amounts ranging from 0.1 to 2 wt. %, and desirably from 0.25 to 0.75 wt.% of the curable composition. Preferably, the antioxidant is Irganox 1035.

Another component included in the curable composition is an adhesion promoter which, as its name implies, enhances the adhesion of the cured coating onto the optical fiber. Such components are well known in the art. The adhesion promoter may be included in amounts ranging from 0.2 wt. % to 2 wt.%, desirably 0.8 to 1.0 wt.%, of the curable composition. Preferably, the adhesion promoter is A-189.

The foregoing components may be mixed together to provide the radiation curable coating. Desirably, the oligomer, diluent monomer, photoinitiator, and antioxidant are mixed and heated at 70°C for about 1 hour to dissolve all the powdery material. Then, the temperature is lowered to not greater than 55 °C, the adhesion promoter is added, and the components are mixed for about 30 minutes.

The following examples are provided as illustrative of the instant claimed radiation curable Primary Coating composition. All amounts are calculated based on weight percent of the total radiation curable composition.

| | Example 1 | Example 2 | Example 3 |
|---|---|---|---|
| **Primary Coating Oligomer** | | | |
| Acrylate (HEA) | 1.41 | 1.61 | 1.54 |
| Aromatic isocyanate (TDI) | 1.05 | 1.20 | 1.15 |
| Aliphatic isocyanate (IPDI) | 4.71 | 4.68 | 5.13 |
| Polyol (P2010) | 42.24 | 42.40 | 46.07 |
| Catalyst (Coscat 83) | 0.03 | 0.03 | 0.03 |
| Inhibitor (BHT) | 0.08 | 0.08 | 0.08 |
| | 49.50 | 50.00 | 54.00 |
| **Radiation Curable Coating Composition** | | | |
| First Diluent (Photomer 4066) | 47.00 | 46.40 | 41.90 |
| Second Diluent (SR306) | 1.00 | 0.80 | 1.00 |
| Photoinitiator (Chivacure TPO) | 1.10 | 1.40 | 1.70 |
| Antioxidant (Irgacure 1035) | 0.50 | 0.50 | 0.50 |
| Adhesion Promoter (A-139 | 0.90 | 0.90 | 0.90 |
| | 100.00 | 100.00 | 100.00 |

| | Example 4 | Example 5 | Example 6 |
|---|---|---|---|
| **Primary Coating Oligomer** | | | |
| Acrylate (HEA) | 1.84 | 1.48 | 1.54 |
| Aromatic isocyanate (TDI) | 1.38 | 1.11 | 1.15 |
| Aliphatic isocyanate (IPDI) | 5.28 | 4.94 | 5.13 |
| Polyol (P2010) | 47.40 | 44.38 | 46.07 |
| Catalyst (DBTDL) | 0.03 | 0.03 | 0.03 |
| Inhibitor (BHT) | 0.08 | 0.08 | 0.08 |
| | 56.00 | 52.00 | 54.00 |
| **Radiation Curable Coating Composition** | | | |
| First Diluent (Photomer 4066) | 40.90 | 44.50 | 41.90 |
| Second Diluent (SR306) | 0.95 | 1.00 | 1.00 |
| Photoinitiator (Chivacure TPO) | 1.70 | 1.40 | 1.70 |
| Photoinitiator (Irgancure 819) | ----- | 1.10 | ---- |
| Antioxidant (Irgacure 1035) | 0.50 | 0.50 | 0.50 |
| Adhesion Promoter (A-139 | 0.90 | 0.90 | 0.90 |
| | 100.00 | 100.00 | 100.00 |

The Primary Coating of the instant claimed invention is referred to as the P Primary Coating.
After the Primary Coating is prepared, it may be applied directly onto the surface of the optical fiber. Drawing is carried out using either wet on dry or wet on wet mode. Wet on dry mode means the liquid Primary Coating is applied wet, and then radiation is applied to cure the liquid Primary Coating to a solid layer on the wire. After the Primary Coating is cured, the Secondary Coating is applied and then cured as well. Wet on wet mode means the liquid Primary Coating is applied wet, then the Secondary Coating is applied wet and then both the Primary Coating and Secondary Coatings are cured.
The preferred radiation to be applied to effect the cure is Ultraviolet.
If the Secondary Coating is clear rather than colored, a layer of ink coating may be applied thereon. If the Secondary Coating is colored, the ink coating layer is typically not applied onto the Secondary Coating. Regardless of whether the ink coating is applied, it is common practice to place a plurality of coated fibers alongside each other in a ribbon assembly, applying a radiation curable matrix coating thereto to hold the plurality of fibers in place in that ribbon assembly.

EXAMPLES

Tensile Strengh, Elongation, and Modulus Test Method

The tensile properties (tensile strength, percent elongation at break, and modulus) of cured film samples are determined using an Instron model 4201 universal testing instrument. Samples are prepared for testing by curing a 75-$\mu$m film of the material using a Fusion UV processor. Samples are cured at 1.0 J/cm$^2$ in a nitrogen atmosphere. Test specimens having a width of 1.27 cm (0.5 inches) and a length of 12.7 cm (5 inches) are cut from the film. The exact thickness of each specimen is measured with a micrometer.

For relatively soft coatings (e.g., those with a modulus of less than about 10 MPa), the coating is drawn down and cured on a glass plate and the individual specimens cut from the glass plate with a scalpel. A 0.9 kg (2-lb) load cell is used in the Instron and modulus is calculated at 2.5% elongation with a least squares fit of the stress-strain plot. Cured films are conditioned at 23.0 $\pm$ 0.1°C and 50.0 $\pm$ 0.5% relative humidity for between about 16 and about 24 hours prior to testing.

For relatively harder coatings, the coating is drawn down on a Mylar film and specimens are cut with a Thwing Albert 1.27 cm (0.5-inch) precision sample cutter. A 9.1 kg (20-lb) load cell is used in the Instron and modulus is calculated at 2.5% elongation from the secant at that point. Cured films are conditioned at 23.0 $\pm$ 0.1°C and 50.0 $\pm$ 0.5% relative humidity for between about 16 and about 24 hours prior to testing.

For testing specimens, the gage length is 5.1 cm (2-inches) and the crosshead speed is 2.54 cm/minute (1.00 inches/minute). All testing is done at a temperature of 23.0$\pm$0.1°C and a relative humidity of 50.0$\pm$0.5%. All measurements are determined from the average of at least 6 test specimens.

DMA Test Method

Dynamic Mechanical Analysis (DMA) is carried out on the test samples using an RSA-II instrument manufactured by Rheometric Scientific Inc. A free film specimen (typically about 36 mm long, 12 mm wide, and 0.075 mm thick) is mounted in the grips of the instrument, and the temperature initially brought to 80°C and held there for about five minutes. During the latter soak period at 80°C., the sample is stretched by about 2.5% of its original length. Also during this time, information about the sample identity, its dimensions, and the specific test method is entered into the software (RSI Orchestrator) residing on the attached personal computer.

All tests are performed at a frequency of 1.0 radians, with the dynamic temperature step method having 2°C steps, a soak time of 5 to 10 seconds, an initial strain of about 0.001 (.DELTA.L./L), L is 22.4 mm in one RSA-II instrument, and with autotension and autostrain options activated. The autotension is set to ensure that the sample remained under a tensile force throughout the run, and autostrain is set to allow the strain to be increased as the sample passed through the glass transition and became softer. After the 5 minute soak time, the temperature in the sample oven is reduced in 20°C steps until the starting temperature, typically -80°C or -60°C is reached. The final temperature of the run is entered into the software before starting the run, such that the data for a sample would extend from the glassy region through the transition region and well into the rubbery region.

The run is started and allowed to proceed to completion. After completion of the run, a graph of Tensile Storage Modulus =E', Tensile Loss Modulus = E", and tan delta, all versus temperature, appeared on the computer screen. The data points on each curve are smoothed, using a program in the software. On this plot, three points representing the glass transition are identified:

1) The temperature at which Tensile Storage Modulus E'=1000 MPa;

2) The temperature at which Tensile Storage Modulus E'=100 MPa;

3) The temperature of the peak in the tan delta curve. If the tan delta curve contained more than one peak, the temperature of each peak is measured. One additional value obtained from the graph is the minimum value for Tensile Loss Modulus E" in the rubbery region. This value is reported as the equilibrium modulus, $E_o$.

Measurement of Dry and Wet Adhesion

Determination of dry and wet adhesion is performed using an Instron model 4201 universal testing instrument. A 75-$\mu$m film is drawn down on a polished TLC glass plate and cured using a Fusion UV processor. Samples are cured at 1.0 J/cm$^2$ in a nitrogen atmosphere.

The samples are conditioned at a temperature of 23 $\pm$ 0.1 °C. and a relative humidity of 50 $\pm$ 0.5% for a period of 7 days. After conditioning, eight specimens are cut 15.3 cm (6 inches) long and 2.54 cm (1 inch) wide with a scalpel in the direction of the draw down. A thin layer of talc is applied to four of the specimens. The first 2.54 cm (inch) of each sample is peeled back from the glass. The glass is secured to a horizontal support on the Instron with the affixed end of the specimen adjacent to a pulley attached to the support and positioned directly underneath the crosshead. A wire is attached to the peeled-back end of the sample, run along the specimen and then run through the pulley in a direction perpendicular to the specimen. The free end of the wire is clamped in the upper jaw of the Instron, which is then activated: The test is continued until the average force value, in grams force/2.54 cm (grams force/inch), became relatively constant. The crosshead speed is 25.4 cm/min (10 in/min). Dry adhesion is the average of the four specimens.

The remaining four specimens are then conditioned at 23 $\pm$0.1°C. and a relative humidity of 95.$\pm$0.5% for 24 hours. A thin layer of a polyethylene/water slurry is applied to the surface of the specimens. Testing is then performed as in the previous paragraph. Wet adhesion is the average of the four specimens.

Water Sensitivity

A layer of the composition is cured to provide a UV cured coating test strip of 3.8 cm $\times$ 3.8 cm $\times$ 15 $\mu$m (1.5 inch.times.1.5 inch times 0.6 mils). The test strip is weighed and placed in a vial containing deionized water, which is subsequently stored for 3 weeks at 23°C. At periodic intervals, e.g. 30 minutes, 1 hour, 2 hours, 3 hours, 6 hours, 1 day, 2 days, 3 days, 7 days, 14 days, and 21 days, the test strip is removed from the vial and gently patted dry with a paper towel and reweighed. The percent water absorption is reported as 100*(weight after immersion-weight before immersion)/(weight before immersion). The peak water absorption is the highest water absorption value reached during the 3-week immersion period. At the end of the 3-week period, the test strip is dried in a 60°C. oven for 1 hour, cooled in a desiccator for 15 minutes, and reweighed. The percent water extractables is reported as 100*(weight before immersion-weight after drying)/(weight before immersion). The water sensitivity is reported as |peak water absorption|+|water extractables|. Three test strips are tested to improve the accuracy of the test.

Refractive Index

The refractive index of the cured compositions is determined with the Becke Line method, which entails matching the refractive index of finely cut strips of the cured composition with immersion liquids of known refraction properties. The test is performed under a microscope at 23°C and with light having a wavelength of 589 nm.

Viscosity

The viscosity is measured using a Physica MC10 Viscometer. The test samples are examined and if an excessive amount of bubbles is present, steps are taken to remove most of the bubbles. Not all bubbles need to be removed at this stage, because the act of sample loading introduces some bubbles.

The instrument is set up for the conventional Z3 system, which is used. The samples are loaded into a disposable aluminum cup by using the syringe to measure out 17 cc. The sample in the cup is examined and if it contains an excessive amount of bubbles, they are removed by a direct means such as centrifugation, or enough time is allowed to elapse to let the bubbles escape from the bulk of the liquid. Bubbles at the top surface of the liquid are acceptable.

The bob is gently lowered into the liquid in the measuring cup, and the cup and bob are installed in the instrument. The sample temperature is allowed to equilibrate with the temperature of the circulating liquid by waiting five minutes. Then, the rotational speed is set to a desired value which will produce the desired shear rate. The desired value of the shear rate is easily determined by one of ordinary skill in the art from an expected viscosity range of the sample. The shear rate is typically 50 sec$^{-1}$ or 100 sec$^{-1}$.The instrument panel reads out a viscosity value, and if the viscosity value varied only slightly (less than 2% relative variation) for 15 seconds, the measurement is complete. If not, it is possible that the temperature had not yet reached an equilibrium value, or that the material is changing due to shearing. If the latter case, further testing at different shear rates will be needed to define the sample's viscous properties. The results reported are the average viscosity values of three test samples. The results are reported either in centipoises (cps) or milliPascal-seconds (mPa·s).

Table 1.

Measurements of tensile, elongation, modulus, viscosity, DMA data and FTIR cure speed for multiple Runs of the composition of Example 1

Wherever test result has a number in parentheses after it, the number in parentheses is the standard deviation for this result.

|  | Run 1 | (Run 2 | Run 3 | Run 4 | Run 5 |
|---|---|---|---|---|---|
| Tensile Test | | | | | |
| Tensile Strength (MPa) | 0.42 (0.04) | 0.61 (0.14) | 0.50 (0.06) | 0.56 (0.10) | 0.50 (0.09) |
| Elongation (%) | 139 (22) | 162 (38) | 144 (20 | 147 (29) | 154 (38) |
| Modulus (MPa) | 0.74 (0.05) | 0.95 (0.05) | 0.82 (0.02) | 0.87 (0.02) | 0.77 (0.04) |
| Viscosity @ 25.0 °C (mPa•s) | 5016 | 5930 | 4910 | 4980 | 4910 |
| DMA | | | | | |
| Equilibrium Modulus (MPa) | 0.87 | 1.00 | 0.99 | 1.05 | 0.83 |
| E' @ 1000 MPa (°C) | -49.9 | -50.4 | -49.5 | -49.4 | -49.8 |
| E' @ 100 MPa (°C) | -38.9 | -39.7 | -38.3 | -38.2 | -38.9 |
| tan delta, max Tg (°C) | -32.6 | -34.5 | -32.7 | -32.5 | -32.7 |
| FTIR Cure Speed (RAU) | | | | | |
| 0.125 s (Ratio to Self) | 26 | 25 | 30 | 30 | 27 |
| 0.250 s (Ratio to Self) | 60 | 59 | 64 | 63 | 61 |
| 0.500 s (Ratio to Self) | 85 | 83 | 86 | 85 | 84 |
| 2.000 s (Absolute) | 98 | 98 | 97 | 97 | 97 |

Table 2. Measurements of tensile test, DMA and FTIR cure speed for multiple Runs of the composition of Example 2. Wherever test result has a number in parentheses after it, the number in parentheses is the standard deviation for this result.

|  | Run 1 | Run 2 |
|---|---|---|
| Tensile Test | | |
| Tensile Strength (MPa) | 0.72 (0.02) | 0.60 (0.04) |
| Elongation (%) | 170(19) | 140(15) |
| Modulus (MPa) | 0.90 (0.02) | 0.92 (0.02) |
| Viscosity @ 25.0 °C (mPa•s) | 4370 | 4484 |
| DMA | | |
| Equilibrium Modulus (MPa) | 1.10 | 1.04 |
| E' @ 1000 MPa (°C) | -50.7 | -50.5 |
| E' @ 100 MPa (°C) | -39.3 | -30.1 |
| tan delta, max Tg (°C) | -33.1 | -33.0 |
| FTIR Cure Speed (RAU) | | |
| 0.125 s (Ratio to Self) | 45 | 43 |
| 0.250 s (Ratio to Self) | 75 | 72 |
| 0.500 s (Ratio to Self) | 90 | 89 |
| 2.000 s (Absolute) | 98 | 98 |

Table 3. Measurements of tensile data, DMA and FTIR cure speed for multiple Runs of the composition of Example 3. Wherever test result has a number in parentheses after it, the number in parentheses is the standard deviation for this result.

|  | Run 1 | Run 2 |
|---|---|---|
| Tensile Test |  |  |
| Tensile Strength (MPa) | 0.58 (0.03) | 0.68 (0.06) |
| Elongation (%) | 143 (13) | 162 (18) |
| Modulus (MPa) | 0.89 (0.03) | 0.97 (0.02) |
| Viscosity @ 25.0 °C (mPa•s) | 7040 | 7210 |
| DMA |  |  |
| Equilibrium Modulus (MPa) | 1.01 | 1.06 |
| E' @ 1.000 MPa (°C) | -51.8 | -51.2 |
| E' @ 100 MPa (°C) | -40.9 | -40.5 |
| tan delta, max Tg (°C) | -34.9 | -35.2 |
| FTIR Cure Speed (RAU) |  |  |
| 0.125 s (Ratio to Self) | 46 | 43 |
| 0.250 s (Ratio to Self | 74 | 72 |
| 0.500 s (Ratio to Self) | 92 | 88 |
| 2.000 s (Absolute) | 98 | 97 |

A cured film of the radiation curable Primary Coatings of the instant claimed invention has a peak tan delta Tg of from -25°C to -45°C. One embodiment of a cured film of the radiation curable Primary Coatings of the instant claimed invention has a peak tan delta Tg of from -30°C to -40°C .

A cured film of the radiation curable Primary Coatings of the instant claimed invention has a modulus of from 0.50 MPa to 1.2 MPa. One embodiment of a cured film of the radiation curable Primary Coatings of the instant claimed invention has a modulus of from 0.6 MPa to 1.0 MPa.

Draw Tower Simulator Discussion and Examples

In the early years of optical fiber coating developments, all newly developed Primary and Secondary Coatings were first tested for their cured film properties and then submitted for evaluation on fiber drawing towers. Out of all the coatings that were requested to be drawn, it was estimated that at most 30% of them were tested on the draw tower, due to high cost and scheduling difficulties. The time from when the coating was first formulated to the time of being applied to glass fiber was typically about 6 months, which greatly slowed the product development cycle.

It is known in the art of radiation cured coatings for optical fiber that when either the Primary Coating or the Secondary Coating was applied to glass fiber, its properties often differ from the flat film properties of a cured film of the same coating. This is believed to be because the coating on fiber and the coating flat film have differences in sample size, geometry, UV intensity exposure, acquired UV total exposure, processing speed, temperature of the substrate, curing temperature, and possibly nitrogen inerting conditions.

Equipment that would provide similar curing conditions as those present at fiber manufacturers, in order to enable a more reliable coating development route and faster turnaround time has been developed. This type of alternative application and curing equipment needed to be easy to use, low maintenance, and offer reproducible performance. The name of the equipment is a "draw tower simulator" hereinafter abbreviated "DTS". Draw tower simulators are custom designed and constructed based on detailed examination of actual glass fiber draw tower components. All the measurements (lamp positions, distance between coating stages, gaps between coating stages and UV lamps, etc) are duplicated from glass fiber drawing towers. This helps mimic the processing conditions used in fiber drawing industry.

One known DTS is equipped with five Fusion F600 lamps - two for the upper coating stage and three for the lower. The second lamp in each stage can be rotated at various angles between 15 - 135°, allowing for a more detailed study of the curing profile.

The "core" used for the known DTS is 130.0±1.0 µm stainless steel wire. Fiber drawing applicators of different designs, from different suppliers, are available for evaluation. This configuration allows the application of optical fiber coatings at similar conditions that actually exist at industry production sites.

The draw tower simulator has already been used to expand the analysis of radiation curable coatings on optical fiber. A method of measuring the Primary Coating's in-situ modulus that can be used to indicate the coating's strength, degree of cure, and the fiber's performance under different environments in 2003 was reported by P. A. M. Steeman, J.J. M. Slot, H. G. H. van Melick, A. A. F. v.d. Ven, H. Cao, and R. Johnson, in the Proceedings of the 52nd IWCS, p. 246 (2003). In 2004, Steeman et al reported on how the rheological high shear profile of optical fiber coatings can be used to predict the coatings' processability at faster drawing speeds P. A. M. Steeman, W. Zoetelief, H. Cao, and M. Bulters, Proceedings of the 53rd IWCS, p. 532 (2004). The draw tower simulator can be used to investigate further the properties of Primary and Secondary Coatings on an optical fiber.

These test methods are useful for Primary Coatings on wire or coatings on optical fiber:

Draw Tower Simulator Test Methods

Percent Reacted Acrylate Unsaturation for the Primary Coating abbreviated as % RAU Primary Test Method:

Degree of cure on the inside Primary Coating on an optical fiber or metal wire is determined by FTIR using a diamond ATR accessory. FTIR instrument parameters include: 100 co-added scans, 4 cm$^{-1}$ resolution, DTGS detector, a spectrum range of 4000 - 650 cm$^{-1}$, and an approximately 25% reduction in the default mirror velocity to improve signal-to-noise. Two spectra are required; one of the uncured liquid coating that corresponds to the coating on the fiber or wire and one of the inner Primary Coating on the fiber or wire. A thin film of contact cement is smeared on the center area of a 2.54 cm (1-inch) square piece of 76 $\mu$m (3-mil) Mylar film. After the contact cement becomes tacky, a piece of the optical fiber or wire is placed in it. Place the sample under a low power optical microscope. The coatings on the fiber or wire are sliced through to the glass using a sharp scalpel. The coatings are then cut lengthwise down the top side of the fiber or wire for approximately 1 centimeter, making sure that the cut is clean and that the outer coating does not fold into the Primary Coating. Then the coatings are spread open onto the contact cement such that the Primary Coating next to the glass or wire is exposed as a flat film. The glass fiber or wire is broken away in the area where the Primary Coating is exposed.

The spectrum of the liquid coating is obtained after completely covering the diamond surface with the coating. The liquid should be the same batch that is used to coat the fiber or wire if possible, but the minimum requirement is that it must be the same formulation. The final format of the spectrum should be in absorbance. The exposed Primary Coating on the Mylar film is mounted on the center of the diamond with the fiber or wire axis parallel to the direction of the infrared beam. Pressure should be put on the back of the sample to insure good contact with the crystal. The resulting spectrum should not contain any absorbances from the contact cement. If contact cement peaks are observed, a fresh sample should be prepared. It is important to run the spectrum immediately after sample preparation rather than preparing any multiple samples and running spectra when all the sample preparations are complete. The final format of the spectrum should be in absorbance.

For both the liquid and the cured coating, measure the peak area of both the acrylate double bond peak at 810 cm$^{-1}$ and a reference peak in the 750 - 780 cm$^{-1}$ region. Peak area is determined using the baseline technique where a baseline is chosen to be tangent to absorbance minima on either side of the peak. The area under the peak and above the baseline is then determined. The integration limits for the liquid and the cured sample are not identical but are similar, especially for the reference peak.

The ratio of the acrylate peak area to the reference peak area is determined for both the liquid and the cured sample. Degree of cure, expressed as percent reacted acrylate unsaturation (% RAU), is calculated from the equation below:

$$\% \ RAU = \frac{(R_L - R_F) \ x \ 100}{R_L}$$

where $R_L$ is the area ratio of the liquid sample and $R_F$ is the area ratio of the cured Primary.

In-situ Modulus of Primary Coating

The in-situ modulus of a Primary Coating on a dual-coated (soft Primary Coating and hard Secondary Coating) glass fiber or a metal wire fiber is measured by this test method. The detailed discussion on this test can be found in Steeman, P.A.M., Slot, J.J.M., Melick, N.G.H. van, Ven, A.A.F. van de, Cao, H. & Johnson, R. (2003). Mechanical analysis of the in-situ Primary Coating modulus test for optical fibers may be determined in accordance with the procedure set forth in Proceedings 52nd International Wire and Cable Symposium (IWCS, Philadelphia, USA, November 10-13, 2003), Paper 41.

For sample preparation, a short length (~2mm) of coating layer is stripped off using a stripping tool at the location ~ 2cm from a fiber end. The fiber is cut to form the other end with 8mm exactly measured from the stripped coating edge to the fiber end. The portion of the 8mm coated fiber is then inserted into a metal sample fixture, as schematically shown in Figure 6 of the paper [1]. The coated fiber is embedded in a micro tube in the fixture; the micro tube consisted of two half cylindrical grooves; its diameter is made to be about the same as the outer diameter (~245$\mu$m) of a standard fiber. The fiber is tightly gripped after the screw is tightened; the gripping force on the Secondary Coating surface is uniform and no significant deformation occurred in the coating layer. The fixture with the fiber is then mounted on a DMA (Dynamic Mechanical Analysis) instrument: Rheometrics Solids Analyzer (RSA-II). The metal fixture is clamped by the bottom grip. The top grip is tightened, pressing on the top portion of the coated fiber to the extent that it crushed the coating layer. The fixture and the fiber must be vertically straight. The non-embedded portion of the fiber should be controlled to a constant length for each sample; 6mm in our tests. Adjust the strain-offset to set the axial pretension to near zero (-1g ~ 1g).

Shear sandwich geometry setting is selected to measure the shear modulus G of the Primary Coating. The sample width, W, of the shear sandwich test is entered to be 0.24mm calculated according to the following equation:

$$W = \frac{(R_p - R_f)\pi}{Ln(R_p / R_f)}$$

wherein $R_f$ and $R_p$ are bare fiber and Primary Coating outer radius respectively. The geometry of a standard fiber, $R_f$ = 62.5$\mu$m and $R_p$=92.5$\mu$m, is used for the calculation. The sample length of 8mm (embedded length) and thickness of 0.03mm (Primary Coating thickness) are entered in the shear sandwich geometry. The tests are conducted at room temperature (~23°C). The test frequency used is 1.0 radian/second. The shear strain $\varepsilon$ is set to be 0.05. A dynamic time sweep is run to obtain 4 data points for measured shear storage modulus G. The reported G is the average of all data points.

This measured shear modulus G is then corrected according to the correction method described in the paper [1]. The correction is to include the glass stretching into consideration in the embedded and the non-embedded parts. In the correction procedures, tensile modulus of the bare fiber ($E_f$) needs to be entered. For glass fibers, $E_f$=70GPa. For the wire fibers where stainless steel S314 wires are used, $E_f$=120GPa. The corrected G value is further adjusted by using the actual $R_f$ and $R_p$ values. For glass fibers, fiber geometry including $R_f$ and $R_P$ values is measured by PK2400 Fiber Geometry System. For wire fibers, $R_f$ is 65$\mu$m for the 130$\mu$m diameter stainless steel S314 wires used; $R_p$ is measured under microscope. Finally, the in-situ modulus E (tensile storage modulus) for Primary Coating on fiber is calculated according to E = 3G. The reported E is the average of three test samples.

### In-situ DMA for $T_g$ measurements of Primary and Secondary Coatings on an optical fiber

The glass transition temperatures ($T_g$) of Primary and Secondary Coatings on a dual-coated glass fiber or a metal wire fiber are measured by this method. These glass transition temperatures are referred to as "Tube Tg".

For sample preparation, strip ~ 2cm length of the coating layers off the fiber as a complete coating tube from one end of the coated fiber by first dipping the coated fiber end along with the stripping tool in liquid $N_2$ for at least 10 seconds and then strip the coating tube off with a fast motion while the coating layers are still rigid.

A DMA (Dynamic Mechanical Analysis) instrument: Rheometrics Solids Analyzer (RSA-II) is used. For RSA-II, the gap between the two grips of RSAII can be expanded as much as 1mm. The gap is first adjusted to the minimum level by adjusting strain offset. A simple sample holder made by a metal plate folded and tightened at the open end by a screw is used to tightly hold the coating tube sample from the lower end. Slide the fixture into the center of the lower grip and tighten the grip. Using tweezers to straighten the coating tube to upright position through the upper grip. Close and tighten the upper grip. Close the oven and set the oven temperature to a value higher than the Tg for Secondary Coating or 100°C with liquid nitrogen as temperature control medium. When the oven temperature reached that temperature, the strain offset is adjusted until the pretension was in the range of 0g to 0.3g

Under the dynamic temperature step test of DMA, the test frequency is set at 1.0 radian/second; the strain is 5E-3; the temperature increment is 2°C and the soak time is 10 seconds.

The geometry type is selected as cylindrical. The geometry setting was the same as the one used for secondary in-situ modulus test. The sample length is the length of the coating tube between the upper edge of the metal fixture and the lower grip, 11mm in our test. The diameter (D) is entered to be 0.16mm according to the following equation:

$$D = 2 \times \sqrt{R_s{}^2 - R_p{}^2}$$

where Rs and Rp are secondary and Primary Coating outer radius respectively. The geometry of a standard fiber, $R_s$= 122.5$\mu$m and $R_p$=92.5$\mu$m, is used for the calculation.

A dynamic temperature step test is run from the starting temperature (100°C in our test) till the temperature below the Primary Coating $T_g$ or -80°C. After the run, the peaks from tan $\delta$ curve are reported as Primary Coating $T_g$ (corresponding to the lower temperature) and Secondary Coating $T_g$ (corresponding to the higher temperature). Note that the measured glass transition temperatures, especially for Primary glass transition temperature, should be considered as relative values of glass transition temperatures for the coating layers on fiber due to the tan $\delta$ shift from the complex structure of the coating tube.

Draw Tower Simulator Examples

Various compositions of the instant claimed Primary Coating and a commercially available radiation curable Secondary Coating are applied to wire using a Draw Tower Simulator. The wire is run at five different line speeds, 750 meters/minute, 1200 meters/minute, 1500 meters/minute, 1800 meters/minute and 2100 meters/minute. Drawing is carried out in wet on dry single mode, meaning the liquid Primary Coating is applied wet, the liquid Primary Coating is cured to a solid layer on the wire.

Multiple runs are conducted with different compositions of the instant claimed Primary Coating and a commercially available radiation curable Secondary Coating. The cured Primary Coating on the fiber is tested for initial %RAU, initial in-situ modulus and initial Tube Tg. The coated wire is then aged for one month at 85°C and 85% relative humidity. The cured Primary Coating on the wire is then aged for one month and tested for %RAU, in-situ modulus and aged Tube Tg.

Set-up conditions for the Draw Tower Simulator:

- Zeidl dies are used. S99 for the 1° ° and S105 for the 2°.
- 750, 1000, 1200, 1500, 1800, and 2100 m/min are the speeds.
- 5 lamps are used in the wet on dry process and 3 lamps are used in the wet on wet process.

- (2) 600 W/in$^2$ D Fusion UV lamps are used at 100% for the 1° coatings.
- (3) 600 W/in$^2$ D Fusion UV lamps are used at 100% for the 2° coatings.

- Temperatures for the two coatings are 30°C. The dies are also set to 30°C.
- Carbon dioxide level is 7 liters/min at each die.
- Nitrogen level is 20 liters/min at each lamp.
- Pressure for the 1° coating is 1 bar at 25 m/min and goes up to 3 bar at 1000 m/min.
- Pressure for the 2° coating is 1 bar at 25 m/min and goes up to 4 bar at 1000 m/min.

The cured radiation curable Primary Coating on wire is found to have the following properties:

| Line Speed (m/min) | % RAU Primary (Initial) | % RAU Primary (1 month) |
|---|---|---|
| 750 | 96 to 99 | 92 to 96 |
| 1200 | 95 to 99 | 92 to 95 |
| 1500 | 88 to 93 | 92 to 96 |
| 1800 | 89 to 93 | 89 to 93 |
| 2100 | 84 to 88 | 88 to 92 |

| Line Speed (m/min) | In-situ Modulus Primary (MPa) | In-situ Modulus Primary (MPa) (1 month) |
|---|---|---|
| 750 | 0.30 to 0.60 | 0.29 to 0.39 |
| 1200 | 0.25 to 0.35 | 0.25 to 0.35 |
| 1500 | 0.17 to 0.28 | 0.25 to 0.35 |
| 1800 | 0.15 to 0.25 | 0.20 to 0.30 |
| 2100 | 0.15 to 0.17 | 0.14 to 0.24 |

| Line Speed (m/min) | Primary Tube Tg values (°C) (initial) | Primary Tube Tg values (°C) (1 month) |
|---|---|---|
| 750 | -47 to -52 | -48 to -52 |
| 1200 | -25 to -51 | -48 to -52 |
| 1500 | -49 to-51 | -46 to -50 |
| 1800 | -47 to -51 | -48 to -52 |
| 2100 | -49 to -55 | -48 to -52 |

Therefore it is possible to describe and claim a wire coated with a first and second layer, wherein the first layer is a cured radiation curable Primary Coating of the instant claimed invention that is in contact with the outer surface of the wire and the second layer is a cured radiation curable Secondary Coating in contact with the outer surface of the Primary Coating,
wherein the cured Primary Coating on the wire has the following properties after initial cure and after one month aging at 85°C and 85% relative humidity:

    A) a % RAU of from 84% to 99%;
    B) an in-situ modulus of between 0.15 MPa and 0.60 MPa; and
    C) a Tube Tg, of from -25°C to -55°C.

Using this information it is possible to describe and claim an optical fiber coated with a first and second layer, wherein the first layer is a cured radiation curable Primary Coating of the instant claimed invention that is in contact with the outer surface of the optical fiber and the second layer is a cured radiation curable Secondary Coating in contact with the outer surface of the Primary Coating,
wherein the cured Primary Coating on the fiber has the following properties after initial cure and after one month aging at 85°C and 85% relative humidity:

    A) a % RAU of from 84% to 99%;
    B) an in-situ modulus of between 0.15 MPa and 0.60 MPa; and
    C) a Tube Tg, of from -25°C to -55°C.

The radiation curable Secondary Coating may be any commercially available radiation curable Secondary Coating for optical fiber. Such commercially available radiation curable Secondary Coatings are available from DSM Desotech Inc., and others, including, but without being limited to Hexion, Luvantix and PhiChem.
The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

**Claims**

1.  A radiation curable Primary Coating composition comprising:

    A) an oligomer;
    B) a first diluent monomer;
    C) a second diluent monomer,
    D) a photoinitiator;
    E) an antioxidant; and
    F) an adhesion promoter;

    wherein said oligomer is the reaction product of:

    i) a hydroxyethyl acrylate;
    ii) an aromatic isocyanate;
    iii) an aliphatic isocyanate;
    iv) a polyol;
    v) a catalyst; and an
    vi) inhibitor, and

    wherein said oligomer has a number average molecular weight of from at least 4000 g/mol to less than or equal to 15,000 g/mol; and
    wherein said catalyst is selected from the group consisting of dibutyl tin dilaurate; metal carboxylates, sulfonic acids, amino or organo-base catalysts, alkoxides of zirconium and titanium, and ionic liquid phosphonium, imidazolium, and pyridinium salts; and
    wherein a cured film of said radiation curable primary coating composition has a peak tan delta Tg measured as described herein of from -25 °C to -45 °C and a modulus of from 0.50 MPa to 1.2 MPa.

2.  A process for coating an optical fiber, the process comprising:

    a) operating a glass drawing tower to produce a glass optical fiber; and
    b) coating said glass optical fiber with the radiation curable Primary Coating composition of Claim 1.

3.  The process of Claim 2 in which said glass drawing tower is operated at a line speed of between 750 meters/minute and 2100 meters/minute.

4.  A wire coated with a first and second layer, wherein the first layer is a cured radiation curable Primary Coating of Claim 1 that is in contact with the outer surface of the wire and the second layer is a cured radiation curable Secondary Coating in contact with the outer surface of the Primary Coating,
    wherein the cured Primary Coating on the wire has the following properties after initial cure and after one month aging at 85 °C and 85 % relative humidity:

    A) a % RAU of from 84 % to 99 %;
    B) an in-situ modulus of between 0.15 MPa and 0.60 MPa; and
    C) a Tube Tg, of from -25 °C to -55 °C.

5.  An optical fiber coated with a first and second layer, wherein the first layer is a cured radiation curable Primary Coating of Claim 1 that is in contact with the outer surface of the optical fiber and the second layer is a cured radiation curable Secondary Coating in contact with the outer surface of the Primary Coating,
    wherein the cured Primary Coating on the optical fiber has the following properties after initial cure and after one month aging at 85 °C and 85 % relative humidity:

    A) a % RAU of from 84 % to 99 %;
    B) an in-situ modulus of between 0.15 MPa and 0.60 MPa; and
    C) a Tube Tg, of from -25 °C to -55 °C.

6.  The radiation curable composition of Claim 1 in which the catalyst is selected from the group consisting of dibutyl tin dilaurate and organobismuth catalysts such as bismuth neodecanoate; zinc neodecanoate; zirconium neodecanoate; zinc 2-ethylhexanoate; and tetradecyl(trihexyl) phosphonium chloride.

7. The radiation curable composition of Claim 6 in which the catalyst is dibutyl tin dilaurate.

**Patentansprüche**

1. Strahlungshärtbare Primärbeschichtungszusammensetzung, umfassend:

   (A) ein oligomer;
   (B) ein erstes Verdünnungsmonomer;
   (C) ein zweites Verdünnungsmonomer;
   (D) einen Photoinitiator;
   (E) ein Antioxidanz und
   (F) einen Adhäsionsförderer,

   worin das Oligomer das Reaktionsprodukt von:

   (i) einem Hydroxyethylacrylat,
   (ii) einem aromatischen Isocyanant,
   (iii) einem aliphatischen Isocyanat,
   (iv) einem Polyol,
   (v) einem Katalysator; und
   (vi) einem Inhibitor ist; und

   worin das Oligomer ein Molekulargewicht im Zahlenmittel von wenigstens 4000 g/mol bis weniger als oder gleich 15000 g/mol hat, und
   worin der Katalysator ausgewählt ist aus der Gruppe, bestehend aus Dibutylzinndilaurat, Metallcarboxylaten, Sulfonsäuren, Katalysatoren auf Amino- oder Organo-Basis, Alkoxiden von Zirkonium und Titanium und ionischen flüssigen Phosphonium-, Imidazolium- und Pyridiniumsalzen; und
   worin ein gehärteter Film der strahlungshärtbaren Primärbeschichtungszusammensetzung ein Peak tan $\delta$-Tg, gemessen wie hierin beschrieben, von -25 bis -45°C und einen Modul von 0,50 MPa bis 1,2 MPa aufweist.

2. Verfahren zur Beschichtung einer optischen Faser, wobei das Verfahren umfasst:

   (a) Bedienen eines Glasziehturmes, zur Erzeugung einer optischen Glasfaser; und
   (b) Beschichten der optischen Glasfaser mit der strahlungshärtbaren Primärzusammensetzung nach Anspruch 1.

3. Verfahren nach Anspruch 2, worin der Glasziehturm bei einer Leitungsgeschwindigkeit zwischen 750 m/min und 2100 m/min bedient wird,

4. Draht, beschichtet mit einer ersten und einer zweiten Schicht, worin die erste Schicht eine gehärtete strahlungshärtbare Primärbeschichtung nach Anspruch 1 ist, die in Kontakt mit der äußeren Oberfläche des Drahtes steht, und die zweite Schicht eine gehärtete strahlungshärtbare Sekundärbeschichtung im Kontakt mit der äußeren Oberfläche der primärbeschichtung ist, worin die gehärtete Primärbeschichtung auf dem Draht die folgenden Eigenschaften nach anfänglicher Härtung und nach 1-monatiger Alterung bei 85°C und 85%iger relativer Feuchtigkeit hat:

   (A) % RAU von 84 bis 99%;
   (B) einen In-situ-Modul zwischen 0,15 und 0,60 MPa; und
   (C) ein Rohr-Tg von -25°C bis -55°C.

5. Optische Faser, beschichtet mit einer ersten und einer zweiten Schicht, worin die erste Schicht eine gehärtete strahlungshärtbare Primärbeschichtung nach Anspruch 1 ist, die in Kontakt mit der äußeren Oberfläche der optischen Faser steht und die zweite Schicht eine gehärtete strahlungshärtbare Sekundärbeschichtung im Kontakt mit der äußeren Oberfläche der Primärbeschichtung ist, worin die gehärtete Primärbeschichtung auf der optischen Faser die folgenden Eigenschaften nach anfänglicher Härtung und nach 1-monatiger Alterung bei 85°C und 85%iger relativer Feuchtigkeit hat:

(A) % RAU von 84 bis 99%;
(B) einem In-situ-Modul zwischen 0,15 und 0,60 MPa; und
(C) ein Rohr-Tg von -25°C bis -55°C.

**6.** Strahlungshärtbare Zusammensetzung nach Anspruch 1, worin der Katalysator ausgewählt ist aus der Gruppe bestehend aus Dibutylzinndilaurat- und Organowismut-Katalysatoren wie Wismutneodecanoat, Zinkneodecanoat, Zirkoniunmeodecanoat, Zink-2-ethylhexanoat und Tetradecyl (trihexyl) phosphoniumchlorid.

**7.** Strahlungshärtbare Zusammensetzung nach Anspruch 6, worin der Katalysator Dibutylzinndilaurat ist.


## Revendications

**1.** Composition de revêtement primaire durcissable par rayonnement comprenant:

A) un oligomère ;
B) un premier monomère diluant ;
C) un second monomère diluant,
D) un photoinitiateur ;
E) un antioxidant ; et
F) un promoteur d'adhésion ;

où ledit oligomère est le produit réactionnel de :

i) une acrylate d'hydroxyéthyle ;
ii) un isocyanate aromatique ;
iii) un isocyanate aliphatique ;
iv) un polyol ;
v) un catalyseur; et
vi) un inhibiteur, et

où ledit oligomère a une masse moléculaire moyenne en nombre d'au moins 4 000 g/mol à moins de ou égale à 15 000 g/mol ; et
où ledit catalyseur est choisi dans le groupe consistant en le dilaurate de dibutylétain ; les carboxylates métalliques, les acides sulfoniques, les catalyseurs à base d'amino ou d'organo, les alcoolats de zirconium et de titane, et les sels de phosphonium, d'imidazolium et de pyridinium liquides ioniques ; et
où un film durci de ladite composition de revêtement primaire durcissable par rayonnement a une Tg de tan delta maximale mesurée comme décrit ici de -25°C à -45°C et un module de 0,50 MPa à 1,2 MPa.

**2.** Procédé pour revêtir une fibre optique, le procédé comprenant :

a) l'actionnement d'une tour d'étirage de verre pour produire une fibre optique en verre ; et
b) le revêtement de ladite fibre optique en verre avec la composition de revêtement primaire durcissable par rayonnement selon la revendication 1.

**3.** Procédé selon la revendication 2 où ladite tour d'étirage de verre est actionnée à une vitesse linéaire entre 750 m/min et 2 100 m/min.

**4.** Fil revêtu d'une première et d'une seconde couche, où la première couche est un revêtement primaire durcissable par rayonnement durci selon la revendication 1 qui est en contact avec la surface externe du fil et la seconde couche est un revêtement secondaire durcissable par rayonnement durci en contact avec la surface externe du revêtement primaire, où le revêtement primaire durci sur le fil a les propriétés suivantes après un durcissement initial et après un vieillissement d'un mois à 85°C et une humidité relative de 85 % :

A) un % RAU de 84% à 99% ;
B) un module in-situ entre 0,15 MPa et 0,60 MPa ; et
C) une Tg de tube de -25°C à -55°C.

5. Fibre optique revêtue d'une première et d'une seconde couche, où la première couche est un revêtement primaire durcissable par rayonnement durci selon la revendication 1 qui est en contact avec la surface externe de la fibre optique et la seconde couche est un revêtement secondaire durcissable par rayonnement durci en contact avec la surface externe du revêtement primaire, où le revêtement primaire durci sur la fibre optique a les propriétés suivantes après un durcissement initial et après un vieillissement d'un mois à 85°C et une humidité relative de 85 % :

   A) un % RAU de 84% à 99% ;
   B) un module in-situ entre 0,15 MPa et 0,60 MPa ; et
   C) une Tg de tube de -25°C à -55°C.

6. Composition durcissable par rayonnement selon la revendication 1 où le catalyseur est choisi dans le groupe consistant en le dilaurate de dibutylétain et les catalyseurs d'organobismuth comme le néodécanoate de bismuth ; le néodécanoate de zinc ; le néodécanoate de zirconium ; le 2-éthythexanoate de zinc ; et le chlorure de tétradécyl (trihexyl)phosphonium.

7. Composition durcissable par rayonnement selon la revendication 6 où le catalyseur est le dilaurate de dibutylétain.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 87472206 P
- US 97463107 P
- CN 16515331
- US 7135229 B
- EP 1408017 A
- US 6714712 B

- WO 0242236 A
- EP 1647585 A
- WO 9857902 A
- US 20040209994 A
- US 5616630 A

### Non-patent literature cited in the description

- **W. Podkoscielny ; B. Tarasiuk.** UV-CURED POLY-URETHANE-ACRYLIC COMPOSITIONS AS HARD EXTERNAL LAYERS OF TWO-LAYER PROTECTIVE COATINGS FOR OPTICAL FIBRES. *Polim.Tworz.Wielk,* 1996, vol. 41 (7/8), 448-55
- **M. Koshiba ; K.K.S. Hwang ; S.K. Foley. ; D.J. Yarusso ; S. L. Cooper.** PROPERTIES OF ULTRAVIOLET CURABLE POLYURETHANE-ACRYLATES. *J.Mat.Sci.,* May 1982, vol. 17 (5), 1447-58
- **Podkoscielny et al.** *Applied Macromolecular Chemistry and Physics,* 1996, vol. 242, 123-138

- **P. A. M. Steeman ; J.J. M. Slot ; H. G. H. van Melick ; A. A. F. v.d. Ven ; H. Cao ; R. Johnson.** *Proceedings of the 52nd IWCS,* 2003, 246
- **P. A. M. Steeman ; W. Zoetelief ; H. Cao ; M. Bulters.** *Proceedings of the 53rd IWCS,* 2004, 532
- **Steeman, P.A.M. ; Slot, J.J.M. ; Melick, N.G.H. van ; Ven, A.A.F. van de ; Cao, H. ; Johnson, R.** Mechanical analysis of the in-situ Primary Coating modulus test for optical fibers may be determined in accordance with the procedure set forth in Proceedings 52nd International Wire and Cable Symposium. *IWCS,* 10 November 2003, 41